# EUROPEAN PATENT SPECIFICATION

(11) **EP 1 021 112 B1**
(45) Date of publication and mention of the grant of the patent: **06.02.2002**
(21) Application number: 98942923.8
(22) Date of filing: 15.09.1998
(51) Int. Cl.: A47F 5/00, A47F 5/10, A47B 47/02, F16B 12/44

(54) **A CONNECTION UNIT AND SYSTEM FOR BEAMS**
VERBINDUNGSEINHEIT UND SYSTEM FÜR BALKEN
UNITE DE RACCORDEMENT ET SYSTEME POUR POUTRES

(30) Priority: 11.10.1997 GB 9721516
(43) Date of publication of application: 26.07.2000
(73) Proprietor: Flowstore Systems Plc, Hayes, Middlesex UB3 1AU (GB)
(72) Inventor: DENNIS, Simon, Ickenham, Middlesex UB10 8TE (GB)
(74) Representative: Enskat, Michael Antony Frank
(86) International application number: GB9802788
(87) International publication number: WO9918829

(56) References cited:
- EP-A1- 0 408 400
- DE-A1- 2 946 882
- DE-B2- 2 031 119
- DE-C2- 2 750 307

## Description

The present invention relates to a connection unit and system. A unit and system according to the independent claims is known from DE-A-27 50 307.

In live racking systems a rack has a plurality of shelves on which goods are stored. The goods are required to drift to the front edge of the shelf where a stop is provided so that all the goods can be lifted off the front of the shelves without having to reach back. To achieve this each shelf is provided with an array of rollers onto which the goods are loaded and the shelves are supported in such a way that they incline slightly downwards towards the stop.

The racking structure which supports the shelves has a plurality of vertical beams spaced apart along the length of opposite lateral sides of the shelves. The vertical beams on each side, support a series of vertically spaced horizontal beams. Each pair of horizontal beams at the same level along opposite lateral sides of the shelves supports a series of transverse beams and it is these transverse beams which support each shelf.

The fixing of these transverse beams to the horizontal beams by traditional means requires a number of components and is time consuming, particularly if the transverse beams have to be supported from the horizontal beam at different heights to obtain the correct shape for the shelf.

It is an object of the invention to provide an improved connection unit and system to enable the interconnection of intersecting beams.

According to the present invention there is provided a connection unit comprising a member having a wall, a series of spaced beam supports extending from said wall, and a pin receiving guide defining a path for a locking pin, which path transverses the space bounded by the outer limits of said supports, whereby when said unit engages a first beam, to be supported thereby, and a second beam is supported by a said beam support, a said pin engaging said first and second beams and extending along said path will cause said second beam to be supported by and locked to said first beam.

Preferably the spaced supports are flanked by constraining means positioned to constrain said second beam when supported by a said beam support against lateral displacement.

Advantageously, said pin receiving guide comprises aligned openings in projections from said wall, which projections flank said series of spaced beam supports.

The wall can comprise a block of material having a recess wherein, said recess accommodating said spaced supports and wherein said path intersects said recess. Advantageously, said beam supports comprise a plurality of spaced lands which project from the base towards the mouth of said recess.

In a modification said wall comprises a plate and said beam supports comprise an array of flaps cut from and bent out of the plane of the wall. The constraining means may comprise lateral portions of the plate bent generally at right angles to the plate.

The spacing between adjacent supports may be tapered.

According to the present invention there is further provided a connection system comprising first and second beams, a connection unit and connection pin means, said first beam defining a channel for slidably receiving and supporting said connection unit, said connection unit defining a series of spaced beam supports extending transversely of the first beam when the connection unit is supported thereby, the second beam being arranged to selectively engage a said beam support, said first and second beams and said connection unit having alignable openings which can be engaged by said connection pin means to lock the second beam to the first beam.

Advantageously, the connection unit comprises a block of material shaped to define a series of spaced lands to form said beam supports. The lands may be encircled by a wall and said aligned openings in said connector extend through said wall and said lands.

The connection unit may comprise a profiled metal sheet member in which flaps have been cut and bent out to define said series of spaced beam supports. The flaps may be cut out the lateral sides of the sheet member or from a central region thereof.

A connection unit and system embodying the present invention will now be described, by way of example, with reference to the accompanying diagrammatic drawings in which:
Figure 1 is an exploded view of the system incorporating a first embodiment of a connection unit;
Figure 2 is a front elevation of a second embodiment of a connection unit;
Figure 3 is a plan view of the connection unit of Figure 2 ;
Figure 4 is a section through the connection unit of Figure 2 taken on the line IV-IV of Figure 2;
Figure 5 is a perspective view of a third embodiment of a connection unit;
Figures 6, 7 and 8 are respectively a plan view, a front elevation and an under plan view of the connection unit of Figure 5; and
Figure 9 is a front elevation of the connection system incorporating a further embodiment of a connection unit.

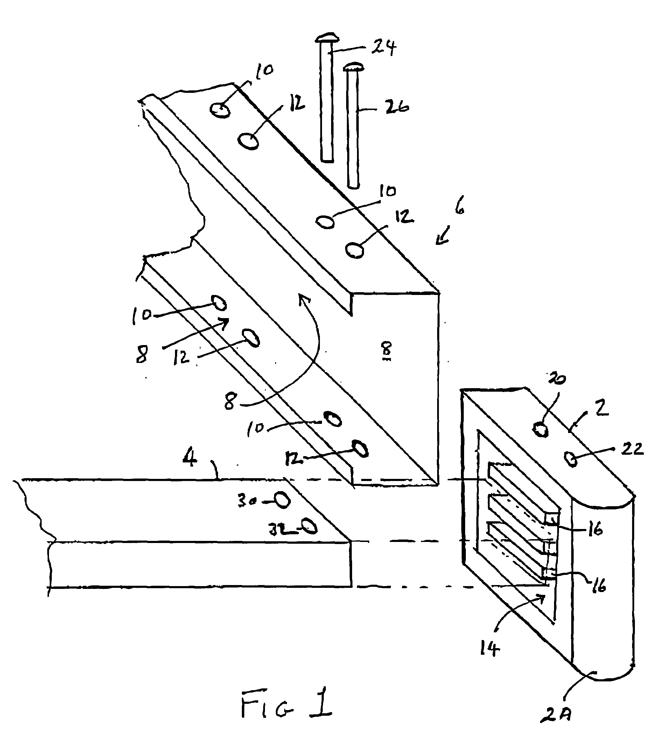

The connection system shown in Figure 1 includes a connection unit 2 which enables a transverse beam 4 to be connected to a horizontal beam 6.

While only one end of the transverse beam 4 is shown, it will be appreciated that its opposite end is secured to another horizontal beam 6 with the aid of a similar connection unit and in a similar manner. The horizontal beam 6 is generally of squared C-shape in cross-section and defines a guide channel 8 which can be engaged by the connection unit 2 and along which the unit 2 can be slid to a desired position. The roof and floor of the beam 6 are provided with spaced pairs of aligned openings 10 and 12.

The connection unit 2 comprises a generally narrow block of material (plastics or metal) having a generally square recess 14 in one flank. Extending from the base of the recess 14 towards the open mouth thereof are a series of vertically spaced horizontally extending lands 16. The lands 16 are generally of flat rectangular cross-section and have a gap between themselves and the faces of the adjacent side walls of the recess 14.

A pair of openings 20 and 22 having the same spacing as the openings 10 and 12 extend through the connection unit 2 to pass through both the recess 14 and all the lands 16 therein.

The transverse beam 4 comprises a hollow rectangular beam having a wall thickness just thinner than the gap between the lands and the recess and internal dimensions sized to accommodate any two adjacent lands 16. The beam 4 can thus be coupled to the connection unit 2 in two possible positions, namely an upper position when it engages the upper two lands 16 and a lower position when it engages the lower two lands 16. Where the connection unit 2 is provided with more than three lands, more coupling positions or heights are possible. The beam 4 is also provided with a pair of openings 30 and 32 having the same spacing as the openings 10 and 12.

A pair of locking pins 24 and 26 are provided to lock the three components together.

In operation to secure the transverse beam 4 to the horizontal beam 6, the end of the beam 4 is offered up to the connection unit 2 to engage the lands 16 for the required height. The connection unit 2 with the beam attached is then coupled to the channel 8 and slid therealong to the pair of holes 10 and 12 located nearest the desired horizontal position. With the pair of holes 10 and 12 aligned with the pair of holes 20 and 22 and the pair of holes 30, 32, the pins 24 and 26 are dropped into the two sets of aligned holes and so lock the three components 2, 4 and 6 in position. The pins are held in position by gravity and merely need to be lifted out to unlock the components from each other.

Where the connection unit 2 is used to form a corner connection, its end face 2A may be curved to present a smooth profile to the outside to provide some protection against the sharp end face edges of the beam 6.

It will be appreciated that the transverse beam 4 is supported by the upper surfaces of the lands 16 and that the side faces of the recess 14 restrain the beam from being twisted about its longitudinal axis.

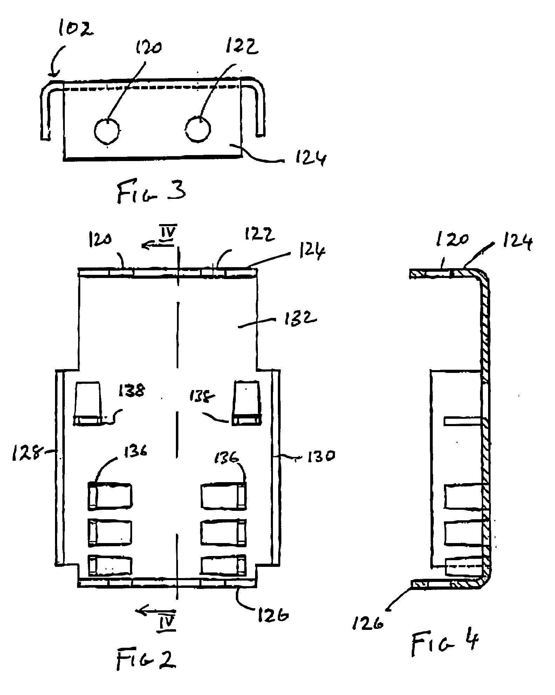

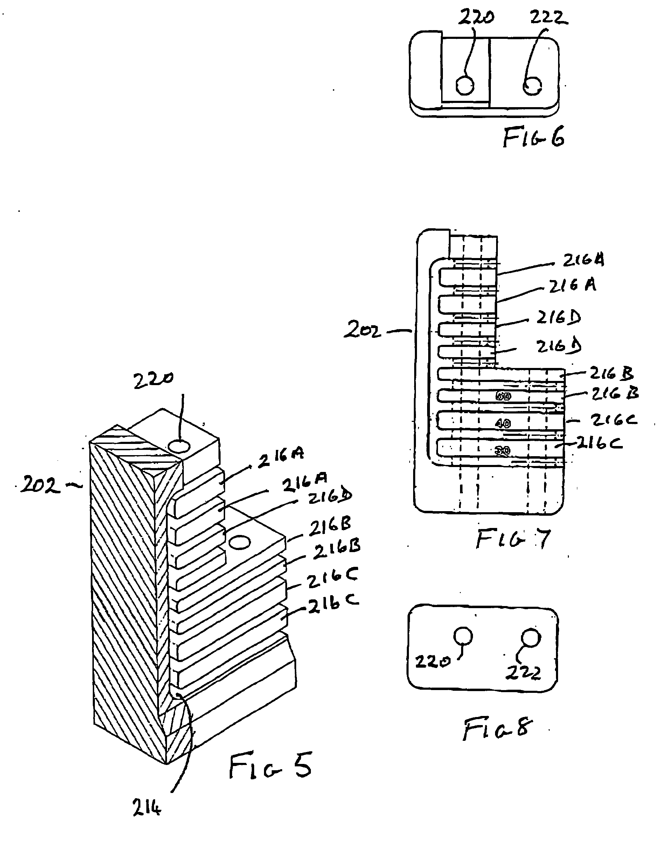

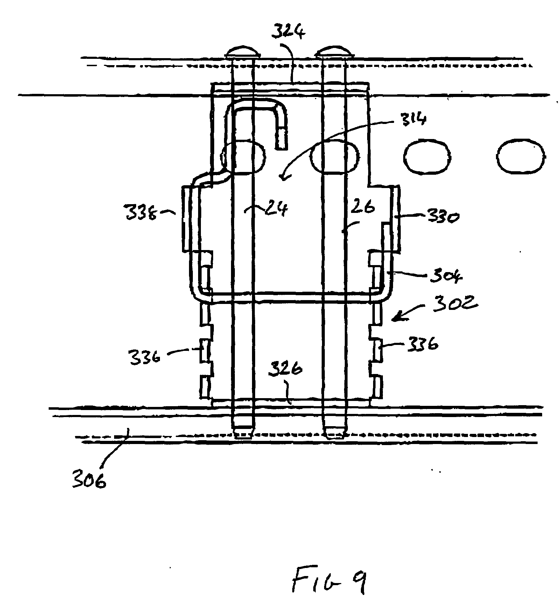

The connection unit 102 shown in Figures 2 to 4 performs the same function as the unit 2 of Figure 1 but is of pressed sheet steel construction.

A profiled plate has its upper and lower portions 124, 126 and its lateral portions 128, 130 all bent at right angles to define a recess similar to the recess 14. The central portion 132 of the plate has a plurality of pairs of spaced flaps 136 cut and bent at right angles. Each pair of flaps defines a support similar in function to the lands 16 of Figure 1. The transverse beam which engages the connection unit 102 may have a hollow profile of generally 'T'-shaped configurations with the base of the T being supported on one pair of flaps 136 and the flanks of the cross-member of the T being supported between the lateral portions 128, 130 and a pair of more widely spaced apart flaps 138 in the central portion 132 so as to constrain the beam against being twisted about its longitudinal axis.

A pair of spaced openings 120, 122 are provided in the upper and lower portions 124, 126 and provide a similar function to the holes 20 and 22 of the Figure 1 embodiment.

The connection unit 202 shown in Figures 5 to 8 comprises a block of molded plastics.

In this arrangement the recess 214 defined by the connector is open along one side and partly along another side. Also a variety of different lands 216 are provided to accommodate different beam profiles. There are two thick full width lands 216C, two thin full width lands 216B, two thick half width lands 216A and two thin half width lands 216D. There is one opening 220 which transverses both the roof and floor of the unit as well as all the lands and a second opening 222 which traverses only the full width lands and the floor. The operation of the connection unit 202 to connect a transverse beam to a horizontal beam is similar to that described in connection with Figure 1. The gap between adjacent lands is tapered so that as the transverse beam engages the gaps it progressively forms a tighter fit with the lands.

In the connection system shown in Figure 9, another form of connection unit 302 of pressed steel sheet is shown. In this arrangement a profiled plate has upper and lower portions 324 and 326 and shortened side portions 338, 330 all bent at right angles to define a recess 314. Pairs of flaps 336 along opposite side portions are cut and bent at right angles to form a support for a beam 304 to perform a similar function to the lands 16 of the Figure 1 embodiment.

The beam 304 has a profile such that its lower wall can rest on the flaps 336 while its two side walls engage the side portions 338 and 330 to prevent the beam 304 from rotating about its axis.

The connection unit 302 is slidably engaged in a horizontal beam 306 and a pair of pins 24 and 26 lock the connection unit 302 to the horizontal beam 306 and lock the transverse beam 304 to the connection unit 302.

## Claims

1. A connection unit (2) comprising a member having a wall, a series of spaced beam supports (16) extending from said wall, **characterised in that** said unit further comprises a pin receiving guide (20,22) defining a path for a locking pin (24,26), which path transverses the space bounded by the outer limits of said supports (16), whereby when said unit (2) engages a first beam (6), to be supported thereby, and a second beam (4) is supported by a said beam support, a said pin (24,26) engaging said first (6) and second (4) beams and extending along said path will cause said second beam (4) to be supported by and locked to said first beam (6).

2. A unit according to Claim 1, wherein the spaced supports are flanked by constraining means positioned to constrain said second beam when supported by a said beam support against lateral displacement.

3. A unit according to Claim 1 or Claim 2, wherein said pin receiving guide comprises aligned openings in projections from said wall, which projections flank said series of spaced beam supports.

4. A unit according to Claim 1, wherein said wall comprises a block of material having a recess wherein, said recess accommodates said spaced supports and wherein said path intersects said recess.

5. A unit according to any preceding claim, wherein said beam supports comprise a plurality of spaced lands which project from the base towards the mouth of said recess.

6. A unit according to any one of Claims 1 to 4, wherein said wall comprises a plate and said beam supports comprise an array of flaps cut from and bent out of the plane of the wall.

7. A unit according to Claim 6, wherein said constraining means comprises lateral portions of the plate bent generally at right angles to the plate.

8. A unit according to any preceding claim, wherein the spacing between adjacent supports is tapered.

9. A connection system comprising first (6) and second (4) beams, a connection unit (2) and connection pin means, said first beam (6) defining a channel (8) for slidably receiving and supporting said connection unit, **characterised by** said connection unit (2) defining a series of spaced beam supports (16) extending transversely of the first beam (6) when the connection unit (2) is supported thereby, the second beam (4) being arranged to selectively engage a said beam support (16), and said first (6) and second beams (4) and said connection unit (2) have alignable openings (10,12,20,22,30,32) which can be engaged by said connection pin means (24,26) to lock the second beam (4) to the first beam (6).

10. A system according to Claim 9, wherein the connection unit comprises a block of material shaped to define a series of spaced lands to form said beam supports.

11. A system according to Claim 10, wherein said lands are encircled by a wall and said aligned openings in said connector extend through said wall and said lands.

12. A system according to Claim 9, wherein said connection unit comprises a profiled metal sheet member in which flaps have been cut and bent out to define said series of spaced beam supports.

13. A system according to Claim 12, wherein the flaps are cut out of the lateral sides of the sheet member.

14. A system according to Claim 12 or to Claim 13, wherein flaps are cut of a central region of the sheet member.

## Patentansprüche

1. Verbindungseinheit (2) bestehend aus einem Element mit einer Wand, einer Reihe mit Abstand angeordneter, sich ab der genannten Wand erstreckender, Balkenstützen (10), **dadurch gekennzeichnet, dass** die genannte Einheit weiter eine Stiftaufnahmeführung (20, 22) umfasst, die einen Pfad für einen Verriegelungsstift (24, 26) definiert, dieser Pfad den Raum durchquert, der durch die äußeren Begrenzungen der genannten Stützen (16) begrenzt wird, wodurch wenn die genannte Einheit (2) einen ersten Balken (6) in Eingriff bringt, um dadurch gestützt zu werden, und ein zweiter Balken (4) von einem genannten Balken gestützt wird, ein genannter Stift (24, 26), der genannte erste (6) und zweite (4) Balken in Eingriff bringt und sich entlang genannten Pfades erstreckt, bewirken wird, dass der genannte zweite Balken (4) vom genannten ersten Balken (6) gestützt und an diesen verriegelt wird.

2. Einheit nach Anspruch 1, wobei die mit Abstand angeordneten Stützen durch einschränkende Mittel flankiert sind, die positioniert sind, den genannten zweiten Balken einzuschränken, wenn er durch eine genannte Balkenstütze gegen laterale Verschiebung gestützt wird.

3. Einheit nach Anspruch 1 oder Anspruch 2, wobei genannte Stiftaufnahmeführung gefluchtete Öffnungen in Vorsprüngen ab genannter Wand aufweist und diese Vorsprünge genannte Reihe der mit Abstand angeordneten Balkenstützen flankieren.

4. Einheit nach Anspruch 1, wobei genannte Wand einen Materialblock mit einer Aussparung aufweist, worin genannte Aussparung genannte mit Abstand angeordnete Stützen aufnimmt und worin sich genannter Pfad mit genannter Aussparung schneidet.

5. Einheit nach einem beliebigen vorherigen Anspruch, wobei genannte Balkenstützen eine Vielheit tragender Flächen aufweisen, die ab der Basis in Richtung des Munds genannter Aussparung hervorstehen.

6. Einheit nach einem der Ansprüche 1 bis 4, wobei genannte Wand eine Platte aufweist und genannte Balkenstützen eine Anordnung von Klappen aufweisen, die aus der Wand ausgeschnitten und aus der Ebene der Wand herausgebogen sind.

7. Einheit nach Anspruch 6, wobei genanntes einschränkendes Mittel laterale Abschnitte der Platte aufweist, die im allgemeinen im rechten Winkel zur Platte gebogen sind.

8. Einheit nach einem beliebigen vorherigen Anspruch, wobei der Abstand zwischen benachbarten Stützen verjüngt ist.

9. Verbindungssystem (2), das erste (6) und zweite (4) Balken, eine Verbindungseinheit (2) und Verbindungsstiftmittel aufweist, genannter erster Balken (6) einen Kanal (8) zur gleitenden Aufnahme und Abstützung genannter Verbindungseinheit definiert, **dadurch gekennzeichnet, dass** genannte Verbindungseinheit (2) eine Reihe mit Abstand angeordneter Balkenstützen (16) definiert, die sich quer vom ersten Balken (6) erstrecken, wenn die Verbindungseinheit (2) dadurch abgestützt wird, wobei der zweite (4) angeordnet ist eine genannte Balkenstütze (16) selektive einzurasten, und genannte erste (6) und zweite (4) Balken und genannte Verbindungseinheit (2) ausrichtbare Öffnungen (10, 12, 20, 22, 30, 32) aufweisen, in die genannte Verbindungsstiftmittel (24, 26) einrasten können, um den zweiten Balken (4) mit dem ersten Balken (6) zu verriegeln.

10. System nach Anspruch 9, wobei die Verbindungseinheit einen Materialblock aufweist, der geformt ist eine Reihe mit Abstand angeordneter tragender Flächen zu definieren, um genannte Balkenstützen zu formen.

11. System nach Anspruch 10, wobei genannte tragende Flächen von einer Wand umgeben sind und sich die genannten ausgerichteten Öffnungen im Verbindungsteil durch die genannte Wand und die genannten tragenden Flächen erstrecken.

12. System nach Anspruch 9, wobei genannte Verbindungseinheit ein Profilblechelement aufweist, in das Klappen geschnitten und ausgebogen worden sind, um die genannte Reihe mit Abstand angeordneter Balkenstützen zu definieren.

13. System nach Anspruch 12, wobei die Klappen aus den lateralen Seiten des Blechelements ausgeschnitten sind.

14. System nach Anspruch 12 oder nach Anspruch 13, worin Klappen aus einer zentralen Region des Blechelements ausgeschnitten sind.

## Revendications

1. Un ensemble de raccordement (2) comprenant une pièce ayant une paroi, une série de supports poutrelle (16) espacés partant de cette paroi, **caractérisé en ce que** l'ensemble comprend de surcroît une rainure (20,22), servant de chemin pour le passage d'une broche de verrouillage, ce chemin passant transversalement dans l'espace défini par les limites extérieures des supports (16), de façon à ce que, quand l'ensemble (2) emboîte une première poutrelle (6) qui le soutiendra et une deuxième poutrelle (4) sera soutenue par un support de poutrelle, une broche (24,26) engageant la première (6) et la deuxième poutrelle (4) et s'étendant le long dudit chemin fera en sorte que la deuxième poutrelle (4) soit soutenue par la première poutrelle (6) à laquelle elle sera aussi verrouillée.

2. Un ensemble selon la revendication 1, dans lequel, les supports espacés sont flanqués de moyens de contrainte placés de façon à empêcher la deuxième poutrelle quand elle est soutenue par le support de poutrelle de se déplacer latéralement.

3. Un ensemble selon la revendication 1 ou 2, dans lequel la rainure recevant la broche comporte des ouvertures alignées dans les projections de la paroi, lesquelles projections flanquent ladite série de supports de poutrelle espacés.

4. Un ensemble selon la revendication 1, dans lequel la paroi comprend un bloc de matériau présentant un renfoncement, ce renfoncement pouvant recevoir des supports espacés, et dans lequel ledit chemin est en intersection avec le renfoncement.

5. Un ensemble selon l'une quelconque des revendications précédentes, dans lequel les supports de poutrelles comportent un nombre de surfaces d'appui espacées projetant de la base vers l'embouchure de cet enfoncement.

6. Un ensemble selon l'une des revendications 1 à 4, dans lequel la paroi comprend une plaque et les supports de poutrelle comprennent un assortiment de volets découpés dans le plan de la paroi et pliés vers l'extérieur.

7. Un ensemble selon la revendication 6, dans lequel le moyen de retenue comprend des portions latérales de la plaque pliées d'une façon générale en angle droit par rapport à la plaque.

8. Un ensemble selon l'une quelconque des revendications précédentes, dans lequel l'espacement entre les supports adjacents est fuselé.

9. Un système de raccordement comprenant une première (6) et une deuxième (4) poutrelle, un ensemble (2) de raccordement et des broches de raccordement, cette première poutrelle (6) définissant une rainure (8) pour le glissement et le support de l'ensemble de raccordement, **caractérisé par le fait que** l'ensemble de raccordement (2) définit une série de supports (16) de poutrelles espacés s'étendant transversalement par rapport à la première poutrelle (6) quand elle soutient l'ensemble de raccordement (2), la deuxième poutrelle (4) étant placée de façon à pouvoir engager sélectivement un support de poutrelle (16) et la première (6) et la deuxième (4) poutrelle et l'ensemble de raccordement (2) ont des ouvertures (10,12,20,22,30,32) qui peuvent s'aligner et dans lesquelles la broche de raccordement (24, 26) peut s'engager pour verrouiller la deuxième poutrelle (4) à la première poutrelle (6).

10. Un système selon la revendication 9, dans lequel l'ensemble de raccordement comprend un bloc de matériau formé de façon à définir une série de surfaces d'appui espacées constituant les supports de poutrelle.

11. Un système selon la revendication 10, dans lequel les surfaces d'appui sont encerclées par une paroi et les ouvertures alignées dans la pièce de raccordement passent à travers la paroi et les surfaces d'appui.

12. Un système selon la revendication 9, dans lequel l'ensemble de raccordement comprend une plaque de métal profilé dans laquelle des volets ont été découpés et pliés à l'extérieur pour définir la série de supports de poutrelle alignés.

13. Un système selon la revendication 12, dans lequel les volets sont découpés dans les côtés latéraux de la plaque de métal.

14. Un système selon la revendication 12 ou 13, dans lequel les volets sont découpés dans une région centrale de la plaque.
